(19) Europäisches Patentamt
European Patent Office
Office européen des brevets

(11) **EP 4 232 960 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **21789717.2**

(22) Anmeldetag: **08.10.2021**

(51) Internationale Patentklassifikation (IPC):
*G06N 3/067* (2006.01)   *G06N 3/048* (2023.01)

(52) Gemeinsame Patentklassifikation (CPC):
**G06N 3/067; G06N 3/048**

(86) Internationale Anmeldenummer:
**PCT/EP2021/077798**

(87) Internationale Veröffentlichungsnummer:
**WO 2022/084063 (28.04.2022 Gazette 2022/17)**

(54) **VORRICHTUNG, SYSTEM UND VERFAHREN ZUR BEREITSTELLUNG EINES KÜNSTLICHEN NEURONALEN NETZES**

DEVICE, SYSTEM AND METHOD FOR PROVIDING AN ARTIFICIAL NEURAL NETWORK

DISPOSITIF, SYSTÈME ET PROCÉDÉ DE FOURNITURE D'UN RÉSEAU NEURONAL ARTIFICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2020 DE 102020213258**

(43) Veröffentlichungstag der Anmeldung:
**30.08.2023 Patentblatt 2023/35**

(73) Patentinhaber: **VOLKSWAGEN AKTIENGESELLSCHAFT**
**38440 Wolfsburg (DE)**

(72) Erfinder: **KURZ, Heiko Gustav**
**30177 Hannover (DE)**

(56) Entgegenhaltungen:
- **CHAKRABORTY INDRANIL ET AL: "Photonic In-Memory Computing Primitive for Spiking Neural Networks Using Phase-Change Materials", 24 October 2018 (2018-10-24), arXiv.org, pages 1 - 14, XP055880385, Retrieved from the Internet <URL:https://arxiv.org/pdf/1808.01241.pdf> [retrieved on 20220118]**
- **TEZAK NIKOLAS ET AL: "Integrated Coherent Ising Machines Based on Self-Phase Modulation in Microring Resonators", 1 January 2020, IEEE JOURNAL OF SELECTED TOPICS IN QUANTUM ELECTRONICS, IEEE, USA, PAGE(S) 1 - 15, ISSN: 1077-260X, XP011739253**
- **JELENA KOCI ET AL: "An End-to-End Deep Neural Network for Autonomous Driving Designed for Embedded Automotive Platforms", SENSORS, vol. 19, no. 9, 3 May 2019 (2019-05-03), pages 2064, XP055759335, DOI: 10.3390/s19092064**

**Beschreibung**

Die vorliegende Erfindung betrifft ein System sowie ein Verfahren zur Bereitstellung eines künstlichen neuronalen Netzes.

Aus dem Stand der Technik ist die Verwendung von künstlichen neuronalen Netzen für eine zunehmende Anzahl von Anwendungen bekannt. Bspw. können im Bereich der Fahrzeugtechnik neuronale Netze die Zuverlässigkeit von automatischen Fahrzeugfunktionen, wie von Fahrerassistenzsystemen, signifikant verbessern.

Die Vorteile des Einsatzes von neuronalen Netzen sollen nachfolgend beispielhaft anhand einer solchen Fahrzeugfunktion beschrieben werden. Es ist bekannt, dass für ein automatisches Fahren eine möglichst sichere Umfelderfassung unabdinglich ist. Dabei wird das Umfeld des Fahrzeuges mit Hilfe von Sensoren, wie Radar, Lidar und Kamerasensoren, erfasst. Ferner kann eine ganzheitliche 360°-3D-Erfassung der Umwelt eingesetzt werden, sodass alle statischen und dynamischen Objekte erfasst und klassifiziert werden können.

Bspw. ist hierbei das neuronale Netz in der Lage, ein Kamerabild einer Frontkamera des Fahrzeuges zu klassifizieren. Dabei kann den einzelnen Pixeln des Kamerabildes durch das neuronale Netzwerk eine Klasse zugeordnet werden (bspw. unterschiedliche Klassen für die Fahrbahn, die Fahrbahnmarkierungen, die Fahrzeuge, die Fußgänger und/oder die Vegetation im Umfeld). Mittels dieser Klasseninformation kann das Umfeld präziser erfasst werden. Es ist hierbei ggf. eine pixelgenaue Zuordnung des Umfeldes möglich. Weiterhin trägt diese Information zum Szenenverständnis bei, so dass die Fahrzeugfunktion adaptiv handeln kann.

Insbesondere der Kamera kommt in einer redundanten, robusten Umfelderfassung eine tragende Rolle zu, da dieser Sensortyp präzise für die Umfelderfassung Winkel messen und zur Klassifikation des Umfelds eingesetzt werden kann. Allerdings ist die Verarbeitung und Klassifizierung der Kamerabilder rechenintensiv und architektonisch aufwändig. Insbesondere bei der 360°-3D-Umfelderfassung kann problematisch sein, dass viele Einzelbilder klassifiziert und prozessiert werden müssen und somit der Rechenaufwand steigt.

Herkömmliche hochperformante, künstliche neuronale Netzwerke (kurz: NN oder KNN) bieten bereits die Möglichkeit, Kamerabilder oder Daten anderer Sensoren mit Bildwiederholraten von weniger als 10Hz zu klassifizieren. Somit kann die Verarbeitung und Klassifizierung bereits deutlich beschleunigt werden.

In manchen Fällen ist dies allerdings noch ungenügend oder verbesserungsfähig, da moderne Kamerasysteme mit 30Hz Bildwiederholrate arbeiten. Bspw. kann eine zuverlässige Umfelderfassung in Echtzeit für die Fahrzeugfunktion gefordert sein, sodass die Verarbeitung und Klassifizierung mit geringerem Zeitaufwand durchgeführt werden muss.

Darüber hinaus steigt die Datenlast mit zunehmendem Auflösungsvermögen der Kamerabilder. Moderne automotive-taugliche Kameras bieten bspw. bereits eine Auflösung um die 8 Mega-Pixel. Die Klassifizierung dieser Kamerabilder im Fahrzeug in Echtzeit ist derzeit nicht möglich oder technisch sehr aufwendig. Der dabei limitierende Faktor ist insbesondere die Prozessorgeschwindigkeit, auch bei Einsatz einer GPU (Grafikprozessor, englisch Graphics Processing Unit), welche nicht ausreichend sein kann, um die Bilder vollständig in Echtzeit zu klassifizieren und zu verarbeiten.

Die Klassifizierung kann insbesondere für das Szenenverständnis des Umfelds notwendig sein, um entsprechend der Umgebung des Fahrzeuges im Fahrmanöver handeln zu können. Eine unvollständige oder fehlerhafte Klassifizierung stellt daher ein Problem für automatische Fahrfunktionen und Fahrerassistenzsysteme dar.

Zusammengefasst ist es daher ein Problem, dass herkömmliche elektronische neuronale Netzwerke in Ihrer Rechenleistung durch die Prozessorgeschwindigkeit begrenzt sind, und für manche Anwendungen daher keine ausreichende Leistung bereitstellen können. Hochauflösende Kamerabilder und Sensordaten können durch neuronale Netzwerke bspw. lediglich mit verminderter Bildwiederholrate unter 10 Hz klassifiziert werden.

Eine alternative Möglichkeit zur Verwendung eines künstlichen neuronalen Netzes, mit einem Ansatz für die Verwendung von optischen Komponenten, ist aus der Schrift WO 2017/210550 A1 bekannt. Des Weiteren ist ein herkömmliches Verfahren aus der WO 2008/136886 A1 bekannt.

Aus Indranil Chakraborty et al: "Photonic In-Memory Computing Primitive for Spiking Neural Networks Using Phase-Change Materials", 24. Oktober 2018 (2018-10-24), arXiv.org, ist ein photonisches neuronales Netz bekannt. Aus Nikolas Tezak et al: "Integrated Coherent Ising Machines Based on Self-Phase Modulation in Microring Resonators", 1. Januar 2020 (2020-01-01), IEEE JOURNAL OF SELECTED TOPICS IN QUANTUM ELECTRONICS, IEEE, USA, PAGE(S) 1 - 15, ISSN: 1077-260X, ist ein integrierter photonischer Schaltkreis bekannt, welcher als optische kohärente Ising Maschine wirkt. Aus Jelena Koci et al: "An End-to-End Deep Neural Network for Autonomous Driving Designed for Embedded Automotive Platforms",SENSORS, Bd. 19, Nr. 9, 3. Mai 2019 (2019-05-03), Seite 2064, DOI: 10.3390/s19092064, ist eine Lösung für ein durchgängiges tiefes neuronales Netz für autonomes Fahren bekannt.

Es ist eine Aufgabe der vorliegenden Erfindung, die voranstehend beschriebenen Nachteile zumindest teilweise zu beheben. Insbesondere ist es eine Aufgabe der vorliegenden Erfindung, eine Erhöhung der Rechengeschwindigkeit neuronaler Netzwerke zu erzielen und insbesondere eine Klassifizierung und Verarbeitung durch das neuronale Netz in Echtzeit, und damit mit vorgegebenem begrenztem Zeitaufwand, durchführen zu können.

Die voranstehende Aufgabe wird gelöst durch ein System mit den Merkmalen des Anspruchs 1 sowie durch ein Verfahren mit den Merkmalen des Anspruchs 8.

Nicht durch die Ansprüche abgedeckt wird eine Vorrichtung zur Bereitstellung eines künstlichen neuronalen Netzes (kurz KNN), vorzugsweise optischen neuronalen Netzes, aufweisend wenigstens eine optische Neuronenkomponente (und insbesondere eine Vielzahl optischer Neuronenkomponenten, jeweils) zur Bereitstellung eines Neurons des Netzes.

Hierbei ist insbesondere vorgesehen, dass die (jeweilige) Neuronenkomponente einen Mikroresonator aufweist, um in einer nichtlinearen Abhängigkeit von einem Eingangssignal der Neuronenkomponente ein Ausgangssignal der Neuronenkomponente auszugeben. In anderen Worten kann das Eingangssignal nichtlinear in das Ausgangssignal transformiert werden. Die Erfindung kann entsprechend durch die Verwendung von wenigstens einem optischen Mikroresonator, insbesondere Mikro-Ringresonator (kurz MRR), als jeweiliges Neuron und ggf. zusätzlich von optischen Gewichten eine optische Prozessierung eines neuronalen Netzes mit Lichtgeschwindigkeit ermöglichen. Damit kann der Vorteil erzielt werden, dass eine höhere Verarbeitungsgeschwindigkeit und im Vergleich mit herkömmlichen optischen neuronalen Netzen ggf. auch eine kompaktere Ausbildung des Netzes bereitgestellt wird. Um das Eingangssignal zu erhalten, kann bspw. eine Eingabeinformation von einer Schnittstellenanordnung empfangen werden. Wenn die Eingabeinformation bereits in optischer Form vorliegt, bspw. das Licht einer Optik eines Sensors oder eine Lidar Strahlung, kann dieses vorteilhafterweise direkt optisch als Eingangssignal für die Neuronenkomponente(n) verwendet werden. Andernfalls kann die Eingabeinformation zuvor in das optische Eingangssignal umgewandelt werden. Die Eingabeinformation bzw. das Eingangssignal kann bspw. auf einen optischen Träger übertragen werden, und im optischen Träger durch den Mikroresonator bspw. über einen Vier-Wellen-Mischprozess eine nichtlineare Antwortfunktion erzeugt werden.

Es ist möglich, dass der Mikroresonator eine nichtlineare Antwortfunktion für das neuronale Netz bereitstellt. Durch die nichtlineare Antwortfunktion kann sich das Ausgangssignal ergeben. Das Ausgangssignal kann gemäß einer möglichen Netzkonfiguration des KNN über wenigstens ein optisches Gewicht an anschließende Neuronenkomponenten weitergeleitet werden, also zur nächsten Neuronenschicht und/oder den Mikroresonatoren der Neuronenkomponenten dieser nächsten Neuronenschicht.

Eine Auswertung des Netzes und der entsprechenden Ausgangssignale kann bspw. anhand der Detektion der Intensität und/oder Phase und/oder Frequenz erfolgen. Weiter ist es denkbar, dass das optische Ausgangssignal durch die Schnittstellenanordnung in eine elektrische Ausgabeinformation umgewandelt wird, um dann durch einen Prozessor wie eine CPU oder eine GPU weiterverarbeitet zu werden. Auf diese Weise kann besonders effizient ein neuronales Netz, insbesondere tiefes optisches neuronales Netzwerk, bereitgestellt werden. Die optische Leistung kann aufgrund der Verwendung von Mikroresonatoren dabei sehr gering bleiben, und somit auch einen geringen Leistungsbedarf von Lichtquellen für das Eingangssignal wie Lasern bedingen. Es ist möglich, dass auf einem Träger wie einen Chip eine Vielzahl von Mikroresonatoren für das Netz mit geringem Platzaufwand befestigt werden. Somit lässt sich ein optisches Netzwerk auf der Chipfläche realisieren. Das gesamte optische neuronale Netz kann auf einem Halbleiter physikalisch fertigbar sein, und bspw. in einen Halbleiterchip integriert werden.

Der (jeweilige) Mikroresonator kann bspw. ein Mikro-Ringresonator sein, vorzugsweise zur Bereitstellung eines optischen nicht-linearen Effekts wie einer Selbstphasenmodulation, um das Neuron des künstlichen neuronalen Netzes bereitzustellen. Konkret kann der Mikroresonator dazu ausgeführt sein, eine nicht-lineare Funktion des Neurons bereitzustellen, bevorzugt eine Aktivierungsfunktion wie eine Sigmoidfunktion. Die Vorrichtung kann als eine optische und/oder elektrooptische Vorrichtung zur Bereitstellung des künstlichen neuronalen Netzes (nachfolgend auch kurz KNN oder NN bezeichnet), insbesondere eines optischen KNN, ausgeführt sein.

Ferner kann es im Rahmen der Erfindung vorgesehen sein, dass der Mikroresonator als ein Mikro-Ringresonator ausgebildet ist. Bspw. kann ein Ringwellenleiter vorgesehen sein, um den Mikro-Ringresonator auszubilden. Ferner kann der Mikro-Ringresonator dazu ausgeführt sein, einen optischen nicht-linearen Effekt bereitzustellen, um das Ausgangssignal zu erzeugen und/oder die nichtlineare Funktion des Neurons bereitzustellen.

Optional kann es vorgesehen sein, dass die Neuronenkomponente jeweils mindestens oder genau einen weiteren Mikroresonator aufweist, wobei die Mikroresonatoren benachbart (insbesondere mit einem vordefinierten Abstand) angeordnet sind, um das genau eine Neuron auszubilden. Durch eine Anpassung des Abstands und/oder des Durchmessers der Mikroresonatoren kann bspw. die Funktion des Neurons und/oder das Gewicht eingestellt werden. Ferner kann es vorgesehen sein, dass die Mikroresonatoren unterschiedliche Durchmesser aufweisen.

Ein weiterer Vorteil im Rahmen der Erfindung ist erzielbar, wenn der Mikroresonator zur Bereitstellung eines optischen nichtlinearen Effekts ausgeführt ist, um einen nichtlinearen Zusammenhang zwischen dem Eingangssignal und dem Ausgangssignal zu definieren. Bspw. kann ein Mehrphotonen-Prozess des Mikroresonators hierzu genutzt werden.

Außerdem ist es von Vorteil, wenn die Neuronenkomponente dazu ausgebildet ist, das Eingangssignal der Neuronenkomponente nichtlinear mittels wenigstens eines optischen nichtlinearen Effekts zu transformieren, um das Ausgangssignal der Neuronenkomponente zu erzeugen, und/oder durch den wenigstens einen optischen nichtlinearen Effekt eine Aktivierungsfunktion mit dem Eingangssignal der Neuronenkomponente als Eingabe bereitzustellen. Bei der Vorrichtung ist entsprechend vorgesehen, dass die Neuronenkomponente als eine nichtlineare optische Komponente ausgeführt ist. Dabei kann in Abhängigkeit von einem Eingangssignal der Neuronenkomponente, welches eine erste Frequenz aufweist, ein Ausgangssignal der Neuronenkomponente mit einer zweiten Frequenz ausgegeben werden, wobei sich die zweite Frequenz von der ersten Frequenz unterscheidet. In anderen Worten kann die Neuronenkomponente dazu ausgeführt sein, eine Frequenzkonversion des Eingangssignals durchzuführen, um das Ausgangssignal zu erhalten.

Das Eingangssignal und das Ausgangssignal sind dabei jeweils als ein optisches Signal, also bspw. als Licht bzw. ein Licht- und/oder Laserstrahl, ausgeführt. Dies ermöglicht es, die Funktion eines Neurons des KNN in optischer Weise bereitzustellen. Die Frequenz des Ausgangssignals kann aufgrund der nichtlinearen Ausführung der Neuronenkomponente nichtlinear von dem Eingangssignal abhängig sein (z. B. von einem Parameter des Eingangssignals wie der Frequenz und/oder Amplitude und/oder Phase und/oder Polarisation). Diese nichtlineare Abhängigkeit ermöglicht es eine Funktion des Neurons, z. B. die Aktivierungsfunktion, bereitzustellen. Eine nichtlineare Abbildung kann durch die Neuronenkomponente z. B. in der Form einer Sigmoidfunktion erfolgen. In anderen Worten kann die Unterscheidung der zweiten von der ersten Frequenz bzw. die Frequenzkonversion durch eine nicht-lineare Abhängigkeit des Ausgangssignals vom Eingangssignal definiert sein. Ein Anstieg des vorgenannten Parameters des Eingangssignals, wie der Frequenz bzw.

Wellenlänge des Lichts, kann dabei aufgrund nichtlinearer Effekte zu einem Anstieg der Frequenz bzw. Wellenlänge des Ausgangssignals gemäß der sigmoidtypischen S-Form führen. Die nichtlineare Abbildung der Neuronenkomponente kann z. B. in der Form $y=f(x)$, und im Falle der Sigmoidfunktion als $y=sig(x)$, dargestellt werden. Die Parameter $x$ und $y$ können dabei jeweils die Frequenzen bzw. Wellenlängen des Lichts bezeichnen, welches somit als Ein- und Ausgangssignal dienen kann.

Es ist insbesondere eine der Erfindung zugrundeliegende Idee, dass die Rechengeschwindigkeit eines KNN dadurch erhöht wird, dass optische Neuronen und optische Gewichte zur optischen Prozessierung von Daten verwendet werden. Dies hat den Vorteil, dass grundsätzlich eine Prozessierung der Daten mit Lichtgeschwindigkeit möglich ist. Die Daten entsprechen dabei der Eingabeinformation, also der Eingabe des KNN, bspw. einer Bildinformation wie einem Kamerabild oder dergleichen. Die Eingabeinformation kann z. B. elektronisch durch die Vorrichtung empfangen werden, dann aber in eine optische Information umgewandelt werden, um das optische Eingangssignal der Neuronenkomponente zu erhalten. Da ein NN (üblicherweise) mehrere Neuronen aufweist, können für mehrere Neuronenkomponenten entsprechend mehrere Eingangssignale aus der Eingabeinformation gebildet werden. Ferner kann die Eingabeinformation und/oder die daraus erhaltene optische Information ggf. zuvor verarbeitet und/oder gewichtet werden, um das wenigstens eine Eingangssignal zu erhalten. Insbesondere wird auf die Gewichtung durch eine Gewichtungskomponente nachfolgend noch näher eingegangen.

Es kann ferner möglich sein, dass die Neuronenkomponente dazu ausgebildet ist, wenigstens ein Gewicht des Netzes bereitzustellen, um anhand einer Gewichtung (durch das Gewicht) des Eingangssignal das Ausgangssignal auszugeben. Alternativ oder zusätzlich ist es denkbar, dass das Gewicht dazu ausgebildet ist, das Eingangssignal linear zu transformieren, um das Ausgangssignal zu erzeugen, wobei das Gewicht zumindest teilweise durch eine Anordnung und/oder Ausbildung des Mikroresonators definiert ist. Die Neuronenkomponente umfasst jeweils mindestens oder genau einen weiteren Mikroresonator, wobei die Mikroresonatoren benachbart angeordnet sind, wobei ein Abstand zwischen den Mikroresonatoren und/oder ein Durchmesser der Mikroresonatoren das Gewicht definiert.

Für die Neuronen und/oder Gewichte des KNN können optische Materialien zur optischen Verarbeitung verwendet werden, sodass das KNN als ein optisches KNN ausgeführt sein kann. Entsprechend kann die wenigstens eine Neuronenkomponente bzw. der Mikroresonator ein optisches Material aufweisen, um einen nichtlinearen Prozess bereitzustellen. Auf diese Weise kann der nichtlineare Prozess der Neuronenkomponente bzw. des Mikroresonators die Funktion des Neurons ausführen. Dadurch wird das Eingangssignal bzw. dessen Informationen mit nahezu Lichtgeschwindigkeit prozessiert. Ferner können Wellenleiter oder auch die Mikroresonatoren als Gewichte des KNN eingesetzt werden. Spezielle optische Materialien können die Eigenschaften der Wellenleiter bzw. Mikroresonatoren dabei so anpassen, sodass eine Gewichtung additiv, subtraktiv oder multiplikativ bewirkt werden kann.

Es ist denkbar, dass die Vorrichtung ferner aufweist:

- wenigstens eine (oder mehrere) optische Gewichtungskomponente(n) (jeweils) zur Bereitstellung von wenigstens einem Gewicht des Netzes, um anhand einer Gewichtung eines Eingangssignals der Gewichtungskomponente ein Ausgangssignal der Gewichtungskomponente auszugeben, wobei vorzugsweise die Gewichtungskomponente hierzu die Gewichtung des Eingangssignals in optischer Weise durchführt.

Die Gewichtungskomponente kann z. B. dadurch zur Bereitstellung des wenigstens einen Gewichts dienen, dass die Gewichtskomponente ein transparentes Material aufweist und/oder ein dotiertes Material aufweist und/oder ein Material mit einer definierten Absorption des durchlaufenden Lichts aufweist und/oder einen optischen Verstärker oder Abschwächer aufweist. Auch ist es denkbar, dass der Mikroresonator die Gewichtungskomponente aufweist. Das Eingangssignal der Gewichtungskomponente ist bspw. das in das Material einfallende Licht, welches das Medium der Gewichtungskomponente durchläuft und wieder austritt, sodass das Ausgangssignal der Gewichtungskomponente das austretende Licht sein kann.

Weiter kann die Neuronenkomponente mit der Gewichtungskomponente, insbesondere optisch, verschaltet sein, z. B. über einen Licht- oder Wellenleiter, um das Eingangssignal der Neuronenkomponente zumindest teilweise aus dem Ausgangssignal der Gewichtungskomponente und ggf. weiterer Gewichtungskomponenten zu bilden. Auf diese Weise kann die Gewichtungskomponente dazu dienen, die Gewichte der Neuronen zu verändern. Es kann durch die Gewichtungskomponente und die Neuronenkomponente somit eine klassische Struktur eines KNN optisch aufgebaut werden. Eine mögliche Topologie des KNN ist dabei ein rekurrentes NN oder ein ein- oder mehrschichtiges Feedforward-Netz. Auch der Aufbau eines Convolutional Neural Network (CNN) - erfindungsgemäß in optischer Weise - ist denkbar.

Die Verschaltung kann ferner auch in der Weise erfolgen, dass das Ausgangssignal der Gewichtungskomponente dem Eingangssignal der Neuronenkomponente entspricht, der die Gewichtungskomponente zugeordnet ist. Eine Gewichtungskomponente kann außerdem fest einer Neuronenkomponente zugeordnet sein, um das Gewichten des Eingangs des Neurons durchzuführen. Dies kann vorteilhafterweise durch eine feste optische Verbindung zwischen Gewichtungs- und Neuronenkomponente erfolgen.

Gegenstand der Erfindung ist ein System für ein Fahrzeug, insbesondere Kraftfahrzeug und/oder autonomes Fahrzeug, nach Anspruch 1 aufweisend:

- eine Vorrichtung,
- wenigstens eine Fahrzeugkomponente.

Damit bringt das erfindungsgemäße System die gleichen Vorteile mit sich, wie sie ausführlich mit Bezug auf eine Vorrichtung beschrieben worden sind.

Erfindungsgemäß ist es vorgesehen, dass die Vorrichtung eine elektronische und/oder elektrooptische Schnittstellenanordnung aufweist, um:

- eine elektrische Eingabeinformation von der Fahrzeugkomponente zu empfangen,
- das optische Eingangssignal der Neuronenkomponente bzw. mehrere optische Eingangssignale für eine Vielzahl von Neuronenkomponenten für das neuronale Netz anhand der empfangenen Eingabeinformation bereitzustellen,
- anhand des optischen Ausgangssignals der Neuronenkomponente eine elektrische Ausgabeinformation für die Fahrzeugkomponente bereitzustellen.

Erfindungsgemäß vorgesehen ist es, dass die wenigstens eine Fahrzeugkomponente eine Erfassungsvorrichtung (wie eine Kamera) aufweist, um die Eingabeinformation in der Form einer Bildinformation zu erzeugen, und wobei die wenigstens eine Fahrzeugkomponente ein Fahrerassistenzsystem zur Bereitstellung einer automatischen Fahrfunktion aufweist, um durch das Fahrerassistenzsystem die Ausgabeinformation auszuwerten, und um hierbei die Ausgabeinformation als eine Klassifizierung eines Umfeld des Fahrzeuges zu verwenden.

Das bereitgestellte KNN kann dazu ausgeführt sein, eine Klassifizierung und Verarbeitung einer Bildinformation als Eingabeinformation, in Echtzeit, und damit mit vorgegebenem limitierten Zeitaufwand, durchführen zu können. Dies kann dadurch erzielt werden, dass das KNN zumindest teilweise aus optischen Komponenten aufgebaut wird, welche eine optische Verarbeitung durchführen. Insbesondere kann die Aktivierungsfunktion der Neuronen des KNN optisch ausgeführt werden. Das KNN kann somit optisch implementiert sein. Dabei kann als der zu verarbeitende Parameter für die Aktivierungsfunktion eine Frequenz des Ein- und/oder Ausgangssignals verwendet werden. Die Frequenz bildet somit das Gegenstück zur elektrischen Spannung bei einer elektronischen Implementierung des KNN.

Ebenfalls Gegenstand der Erfindung ist ein Verfahren nach Anspruch 8 zur Bereitstellung eines künstlichen neuronalen Netzes.

Damit bringt das erfindungsgemäße Verfahren die gleichen Vorteile mit sich, wie sie ausführlich mit Bezug auf eine Vorrichtung beschrieben worden sind. Zudem kann das Verfahren geeignet sein, eine Vorrichtung zu betreiben.

In einer weiteren Möglichkeit kann vorgesehen sein, dass die nichtlineare Abhängigkeit dadurch bereitgestellt wird, dass das Eingangssignal durch den Mikroresonator nichtlinear transformiert wird, um das Ausgangssignal zu erzeugen, wobei hierzu insbesondere eine Selbstphasenmodulation des Mikroresonators verwendet wird. Es ist dabei möglich, dass sämtliche Teile eines künstlichen neuronalen Netzes durch die Vorrichtung optisch abgebildet werden. Bspw. können die Neuronen des KNN jeweils durch die Neuronenkomponente bzw. Mikroresonatoren bereitgestellt sein, und/oder die Gewichtungen durch die Gewichtungskomponente bzw. Mikroresonatoren bereitgestellt sein.

Gemäß einem weiteren Vorteil kann vorgesehen sein, dass durch das Neuron eine Amplitude oder eine Frequenz des Eingangssignals nichtlinear verändert wird, um das Ausgangssignal zu erhalten. Es ist möglich, dass die Gewichtung ebenfalls durch eine Veränderung der Frequenz und/oder eine Veränderung der Amplitude bereitgestellt wird. Die Einstellung der Funktion und/oder Gewichtung kann hierbei durch eine Veränderung der Struktur des Mikroresonators möglich sein. Bspw. kann die Veränderung der Amplitude durch eine Absorptionscharakteristik des Mikroresonators beeinflusst werden oder die Veränderung der Frequenz durch eine Einstellung des Durchmessers des Mikroresonators.

Die Vorrichtung weist wenigstens eine oder vorzugsweise mehrere optische Neuronenkomponente(n) (jeweils) zur Bereitstellung wenigstens eines Neurons des Netzes auf. Die Neuronenkomponente kann dazu ausgeführt sein, die Funktion eines Neurons des KNN in optischer Weise bereitzustellen. Dies hat den Vorteil, dass das KNN zumindest teilweise eine optische Verarbeitung durchführt, und somit die Verarbeitung mit höherer Geschwindigkeit durchführen kann als ein herkömmliches elektronisches KNN. Im Unterschied zu herkömmlichen optischen Ansätzen bei KNN ist bei der Vorrichtung insbesondere vorgesehen, dass optische nichtlineare Effekte (d. h. Effekte der nichtlinearen Optik) genutzt werden, um die Funktion des Neurons und insbesondere die Aktivierungsfunktion bereitzustellen.

Des Weiteren ist es denkbar, dass die Neuronenkomponente dazu ausgebildet ist, in Abhängigkeit von dem Eingangssignal der Neuronenkomponente, welches eine erste Amplitude und/oder Phase aufweist, ein Ausgangssignal der Neuronenkomponente mit einer zweiten Amplitude und/oder Phase auszugeben, wobei sich die zweite Amplitude und/oder Phase von der ersten Amplitude und/oder Phase unterscheidet. Entsprechend ist es möglich, nicht (nur) die Frequenz als Parameter des Ein- und/oder Ausgangssignals optisch zu verarbeiten, sondern auch weitere Parameter wie die Amplitude und/oder Phase. Damit kann die Zuverlässigkeit der Verarbeitung weiter erhöht werden.

Erfindungsgemäß ist eine elektronische und/oder elektrooptische Schnittstellenanordnng zu einer Fahrzeugkomponente vorgesehen, um das künstliche neuronale Netz bei einem Fahrzeug bereitzustellen. Die Schnittstellenanordnung wandelt eine elektrische Eingabeinformation (z. B. in der Form von digitalen Daten und/oder elektrischen Signalen) in eine optische Information um, um die Verarbeitung durch das optische KNN zu ermöglichen. Aus den optischen Ausgangssignalen der Neuronenkomponenten wird anschließend wieder eine elektrische Ausgabeinformation durch die Schnittstellenanordnung gebildet. Die elektrischen Informationen werden dabei im Gegensatz zu den beschriebenen Ein- und Ausgabesignalen nicht optisch, sondern über elektrische Leiter übertragen. Entsprechend kann es vorgesehen sein, dass die Vorrichtung durch die Schnittstellenanordnung über Kabel mit einer Elektronik, insbesondere Fahrzeugkomponente, verbunden ist, um die Ein- und Ausgabeinformationen elektrisch zu übertragen.

Vorteilhaft ist es zudem, wenn das Fahrzeug als ein Kraftfahrzeug, insbesondere gleisloses Landkraftfahrzeug, ausgebildet ist. So kann das Fahrzeug z. B. als ein Hybridfahrzeug, das eine Brennkraftmaschine und eine Elektromaschine zur Traktion umfasst, oder als ein (reines) Elektrofahrzeug oder nur mit einer Brennkraftmaschine ausgebildet sein. Vorzugsweise kann das Fahrzeug mit einem Hochvolt-Bordnetz und/oder einem Elektromotor ausgeführt sein. Auch kann das Fahrzeug als ein Brennstoffzellenfahrzeug ausgebildet sein. Es kann sich weiter bei dem Fahrzeug um ein Personenkraftfahrzeug oder Lastkraftfahrzeug handeln. Bevorzugt ist bei Ausführungsformen von Elektrofahrzeugen kein Verbrennungsmotor beim Fahrzeug vorgesehen, es wird dann ausschließlich durch elektrische Energie angetrieben. Erfindungsgemäß ist es vorgesehen, dass die wenigstens eine Fahrzeugkomponente eine Erfassungsvorrichtung, wie eine Kamera, aufweist, um die Eingabeinformation in der Form einer Bildinformation zu erzeugen, und wobei die wenigstens eine Fahrzeugkomponente ein Fahrerassistenzsystem zur Bereitstellung einer automatischen Fahrfunktion aufweist, um durch das Fahrerassistenzsystem die Ausgabeinformation auszuwerten, und um hierbei die Ausgabeinformation als eine Klassifizierung eines Umfeld des Fahrzeuges zu verwenden. Die Verwendung des optischen KNN kann dabei eine Auswertung der vollständigen Bildinformation in Echtzeit ermöglichen. Die Erfassungsvorrichtung umfasst z. B. einen Radar und/oder Lidar und/oder Ultraschall, bzw. wenigstens einen Radar- und/oder Lidar- und/oder Ultraschallsensor, und/oder wenigstens eine Kamera, insbesondere Frontkamera des Fahrzeuges. Die Erfassungsvorrichtung kann zur Erfassung der Umgebung des Fahrzeuges, insbesondere in Fahrtrichtung, ausgeführt sein.

Es zeigen:

Fig. 1 eine schematische Darstellung eines neuronalen Netzes,

Fig. 2 eine schematische Darstellung einer Vorrichtung und eines erfindungsgemäßen Systems,

Fig. 3 eine schematische Darstellung zur Visualisierung eines erfindungsgemäßen Verfahrens,

Fig. 4 bis 8 Mögliche Ausführungsformen von Teilen einer Vorrichtung.

In den nachfolgenden Figuren werden für die gleichen technischen Merkmale auch von unterschiedlichen Ausführungsbeispielen die identischen Bezugszeichen verwendet.

Für viele Anwendungsfälle werden neuronale Netze benötigt. Bspw. kann bei Fahrzeugen 8 eine Datenverarbeitung durch neuronale Netze 200 für Fahrerassistenzsysteme 7 von der Klassifizierung von Bildern einer Umfelderfassung profitieren. So ist für das automatische Fahren eine möglichst sichere Umfeldwahrnehmung unabdinglich. Dabei wird das Umfeld mit Hilfe von Erfassungsvorrichtungen 6 des Fahrzeuges 8, wie Radar, Lidar und Kamera erfasst. Besonders vorteilhaft kann hier eine ganzheitliche 360° dreidimensionale Erfassung der Umwelt sein, sodass die relevanten statischen und dynamischen Objekte erfasst und klassifiziert werden können. Insbesondere der Kamera kommt in der redundanten, robusten Umfelderfassung eine tragende Rolle zugute, da dieser Sensortyp präzise in der Umfelderfassung Winkel messen und zur Klassifikation des Umfelds eingesetzt werden kann. Allerdings ist die Verarbeitung und Klassifizierung der Kamerabilder rechenintensiv und architektonisch aufwändig. Insbesondere die 360° Umfelderfassung ist problematisch, da viele Einzelbilder klassifiziert und prozessiert werden müssen und somit der Rechenaufwand steigt. Eine Vorrichtung 10 kann zur Lösung dieses Problems beitragen.

Das künstliche neuronale Netz 200 wird in einer automatischen Fahrfunktion zur Klassifizierung des Umfelds eines Fahrzeugs verwendet. Dabei können Sensordaten elektronisch über eine Gewichtung 252 (engl. "weights") an Neuronen 251 weitergegeben werden. Das Ausgangssignal 222 der Neuronen 251, und somit das weitergegebene Signal an die Neuronen 251 der darauffolgenden Schicht, ist dabei vorzugsweise durch eine Sigmoid-Funktion der Summe gewichteter Antwortfunktionen

$$a_1^1 = \sigma \left( \sum \omega_i a_i^0 \right) \qquad (1)$$

gegeben, wobei $\omega_i$ die Gewichte 252, $a_i^0$ die Neuronen 251 und $\sigma$ die Sigmoid-Funktion darstellen. Das künstliche neuronale Netz 200 bildet somit eine Funktion

$$f(a^0, ..., a^n) = (y_0, ..., y_k) \qquad (2)$$

mit $k, n \in \mathbb{N}$, und wobei die Funktionswerte $y_i$ als Klasseninformation ausgegeben werden.

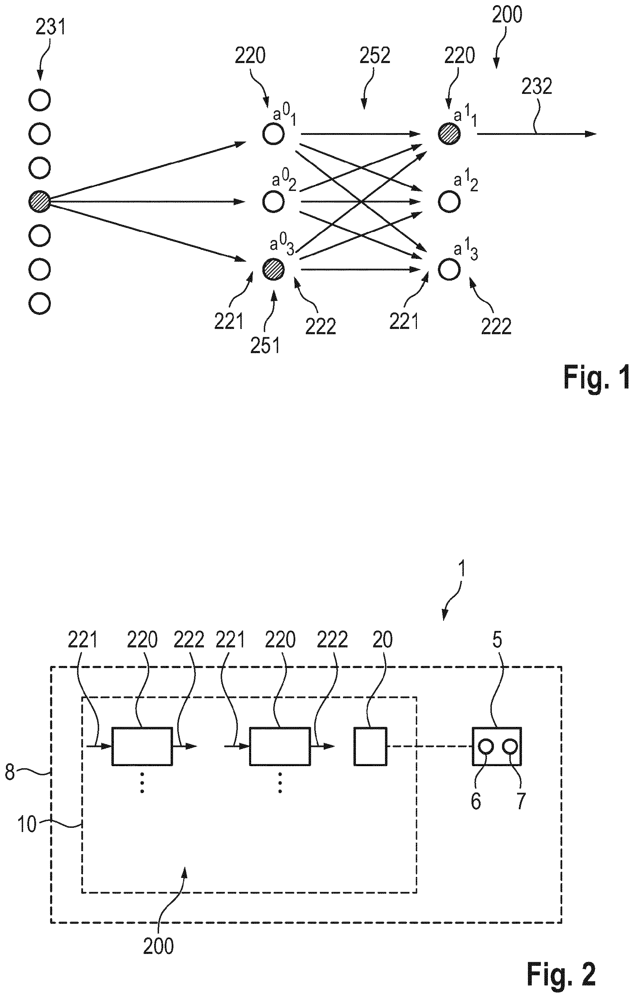

In Figur 1 ist ein derartiges künstliches neuronales Netz 200 beispielhaft mit den Ein- und Ausgabeinformationen 231, 232 sowie dem durch Neuronenkomponenten 220 jeweils gebildeten Neuron 251 und Gewicht 252 schematisch dargestellt.

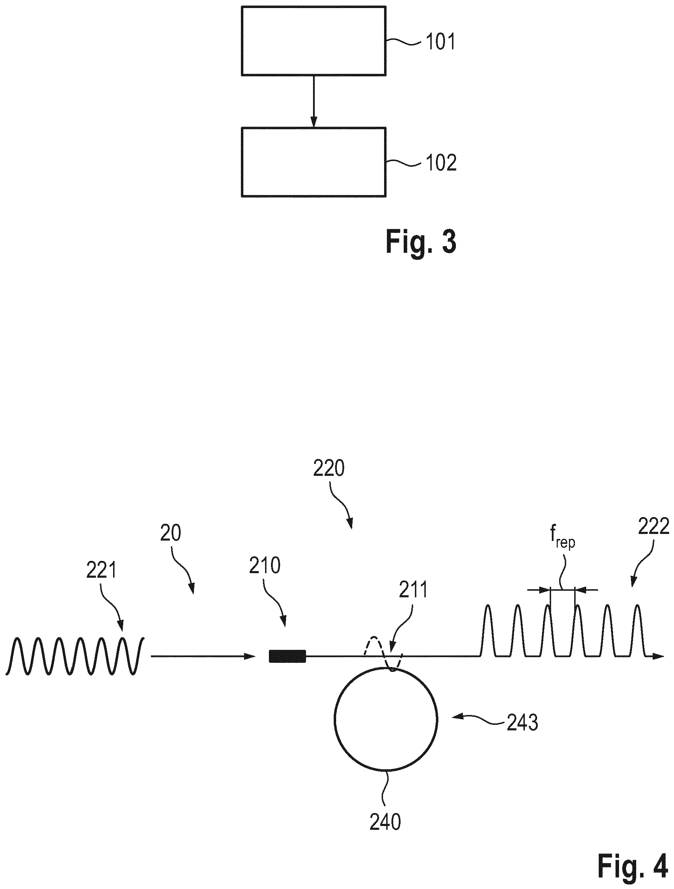

In Figur 2 ist schematisch eine Vorrichtung 10 zur Bereitstellung eines künstlichen neuronalen Netzes 200 gezeigt. Die Vorrichtung 10 weist die wenigstens eine optische Neuronenkomponente 220 zur Bereitstellung des Neurons 251 des Netzes 200 auf. Dabei ist es vorgesehen, dass die Neuronenkomponente 220 einen (in den Figuren 4 bis 8 näher veranschaulichten) Mikroresonator 240 aufweist, um in einer nichtlinearen Abhängigkeit von einem Eingangssignal 221 der Neuronenkomponente 220 ein Ausgangssignal 222 der Neuronenkomponente 220 auszugeben.

Die Vorrichtung 10 ist Teil eines erfindungsgemäßen Systems 1 für ein Fahrzeug 8, wie ebenfalls in Figur 2 gezeigt ist. Hierbei wird das neuronale Netz 200 für wenigstens eine Fahrzeugkomponente 5 verwendet, wobei die Fahrzeugkomponente 5 z. B. ein zuvor beschriebenes Fahrerassistenzsystem 7 ist. Entsprechend dient das neuronale Netz 200 zur Klassifizierung von Bildern einer Erfassungsvorrichtung 6, bspw. zur Unterscheidung von statischen und dynamischen Objekten in den Bildern. Die Bilder liegen in der Form von Eingabeinformationen 231 vor und werden über eine Schnittstellenanordnung 20 an wenigstens einer Neuronenkomponente 220 bereitgestellt. Hierzu findet eine Umwandlung in ein optisches Eingangssignal 221 statt.

In Figur 3 sind schematisch die Verfahrensschritte 101-102 eines erfindungsgemäßen Verfahrens dargestellt. Gemäß einem ersten Schritt 101 erfolgt ein Bereitstellen eines Neurons 251 des Netzes 200 durch wenigstens eine optische Neuronenkomponente 220, wobei die Neuronenkomponente 220 einen Mikroresonator 240 aufweist. Gemäß einem zweiten Schritt 102 erfolgt ein Ausgeben eines Ausgangssignals 222 der Neuronenkomponente 220 in einer nichtlinearen Abhängigkeit von einem Eingangssignal 221 der Neuronenkomponente 220 zumindest teilweise durch den Mikroresonator 240.

In Figur 4 ist schematisch ein Mikroresonator 240 in der Form eines Mikro-Ringresonators dargestellt. Das Eingangssignal 221 wird hier beispielhaft in der Form eines Continuous wave (CW) Laserstrahls in einen Wellenleiter 210 eingekoppelt, wobei grundsätzlich auch ein Pulslaser hierzu verwendet werden kann. Das Eingangssignal 221 kann bspw. auch von einer Eingabeinformation 231 stammen, und über eine optische Schnittstellenanordnung 20 eingekoppelt werden. Der Wellenleiter 210 kann als Teil eines optischen Halbleiters ausgebildet sein. Anschließend kann in einer Wechselwirkungszone 211 das eingekoppelte Eingangssignal 221 als evaneszentes Feld in den Mikroresonator 240 (auch Resonatorring bezeichnet), insbesondere in einen Ringwellenleiter 243 (kurz: Ring), eingekoppelt werden. Der Ringwellenleiter 243 kann als ringförmige Wellenleiterstruktur in einem sehr kleinen Abstand A zum Wellenleiter 210 in der Form einer linearen Wellenleiterstruktur auf dem Halbleiter angeordnet sein. Wenn der Abstand A der beiden Wellenleiter 210, 243 so gering ist, dass das evaneszente Feld der elektromagnetischen Strahlung im linearen Wellenleiter 210 in den Ringwellenleiter 243 hineinragt, wird Strahlung aus dem linearen Wellenleiter 210 in den Ringwellenleiter 243 eingekoppelt, welche dort propagiert. Die optische Pfadlänge des Ringwellenleiters 243 kann dabei so gewählt sein, dass sie ein ganzzahliges Vielfaches der Wellenlänge beträgt. Auf diese Weise kann das im Ringwellenleiter 243 propagierende Licht nach einem Umlaufzyklus konstruktiv mit dem einkoppelnden evaneszenten Feld interferieren und es kommt zu einer Verstärkung. Wenn die Wechselwirkungszone 211 zwischen dem linearen und ringförmigen Wellenleiter 210 im Bereich der Wellenlänge ist, ist die Wechselwirkung beider Felder nur von kurzer Dauer, sodass konstruktive Interferenz stattfindet. Somit bildet die dargestellte Neuronenkomponente 220 einen optischen Resonator.

Nach einem Zyklus können das neu eingekoppelte Feld und das bereits im Ring befindliche Feld konstruktiv interferieren. Auf diese Weise kann eine Amplitudenmodulation erzeugt werden. Ein geringer Teil kann hingegen ausgekoppelt werden. Durch die steigende Intensität im Ring kann sich ein fundamentales Soliton aufbauen, welches in der Form eines Pulszugs als Ausgangssignal 222 ausgekoppelt wird.

Ein Teil des innerhalb des Ringwellenleiter 243 propagierenden Lichts wird nach der Vollendung eines jeden Zyklus wieder in den linearen Wellenleiter 210 ausgekoppelt und kann als Signal genutzt werden. Durch den Mikro-Ringresonator kann das Licht bei geeigneter Wahl von Durchmesser D und Kopplungsverhältnis der Wellenleiter 210 amplitudenmoduliert werden, sodass aus dem Eingangssignal 221, insbesondere einem CW-Eingangssignal 221, das Ausgangssignal 222 gebildet wird, welches einen Puls mit vielfach höherer Spitzenintensität als am Eingang anliegend aufweisen kann. In Halbleitern reicht der Durchmesser D der MRRs von einigen $100\,\mu m$ bis zu wenigen $\mu m$. Die Umlaufzeit des Lichts bestimmt dabei Repetitionsrate frep des Ausgangssignals 222.

Ein derartiger Mikro-Ringresonator kann hohe Gütefaktoren aufweisen, welche zu Spitzenintensitäten innerhalb des Mikroresonators 240 führen, die nichtlineare optische Prozesse treiben können (sogenannte Mehrphotonen-Prozesse). Diese können während der Wechselwirkung von Licht, hoher Intensität und Materie auftreten. Effekte, wie Frequenzverdopplung oder Summen- und Differenzfrequenzerzeugung, benötigen zwei Photonen und induzieren eine Nichtlinearität zweiter Ordnung im Material. Effekte dritter Ordnung, wie Frequenzverdreifachung, o.ä. benötigen drei Photonen zur Frequenzkonversion der Ordnung drei, etc. Diese Effekte der nichtlinearen Licht-Materie-Wechselwirkung bieten die Möglichkeit, eine einfallende Lichtwelle nichtlinear zu modulieren.

In MRRs kann bei hinreichender Einkopplung in den Ring der nichtlineare Brechungsindex somit nicht vernachlässigt werden. So treten z. B. auf Grund des Kerr-Effekts Vier-Wellen-Mischprozesse während der Wechselwirkung von Licht hoher Spitzenintensität mit dem Wellenleiter 210 auf. Durch das stetige Anwachsen der Intensität im Resonatorring 240 tritt dabei zunächst ein degenerativer Vier-Wellen-Mischprozess ein. Darin werden zwei Photonen des Eingangssignals 221 absorbiert (optisches Pumpen) und ein Elektron auf ein virtuelles oder reales, energetisch höheres Niveau angehoben. Das Elektron fällt nach kurzer Zeit (stimuliert) in den Grundzustand zurück. Dabei emittiert es die aufgenommene Energie in Form eines Signal- und eines Idler-Seitenband-Photons, welche nur in der Summe mit der Photonenenergie mit den zwei Photonen des Eingangssignals 221 übereinstimmen. Somit werden neue Spektralanteile innerhalb des Resonators erzeugt.

Signal- und Idler-Seitenband-Photonen sind durch den kohärenten Entstehungsprozess in Phase, Amplitude und Frequenz korreliert. Durch die zunehmende Frequenzkonversion wird der Resonator bistabil, sodass leichte Varianzen in Phase und Frequenz entstehen, welche wiederum neue Seitenbänder der Seitenbänder erzeugen. Es setzt ein nicht-degenerativer Vier-Wellen-Mischprozess ein und die Erzeugung neuer Frequenzen kaskadiert. Die neu erzeugten Frequenzen sind in fester Phasen- und Frequenzbeziehung zueinander, die spektralen Moden sind demnach gekoppelt. Durch diese einsetzende Modenkopplung kann sich ein fundamentales Soliton entwickeln, sodass ein Puls hoher spektraler Bandbreite ausgebildet wird, welcher dispersionsfrei im Resonator propagiert und sich mit der Resonatorfrequenz frep reproduziert. Somit wird aus einem Eingangssignal 221 (z. B. des CW-Lasers) ein gepulstes Ausgangssignal 222, welches sich durch ein extrem hohes Signal-zu-Rauschverhältnis und niedrigen zeitliche Varianzen auszeichnet.

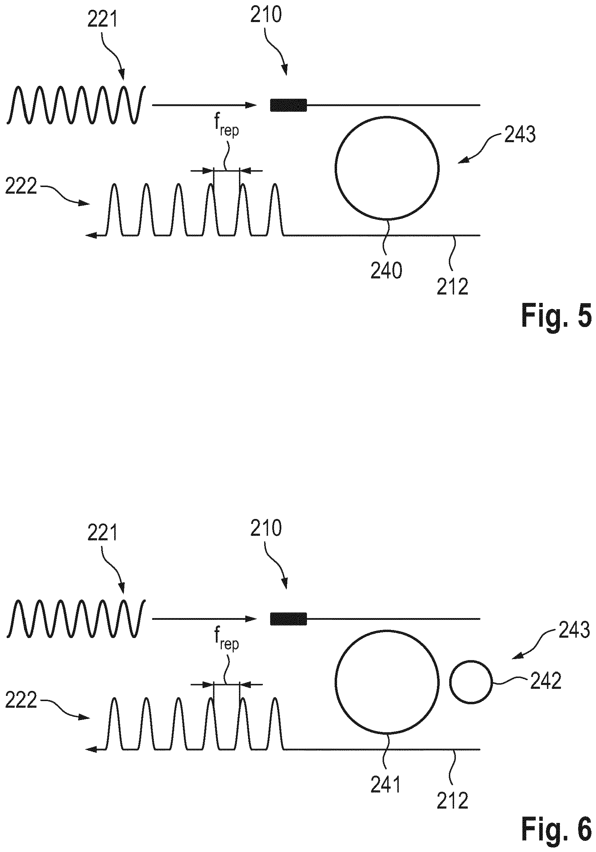

Zur Erzeugung des Ausgangssignals 222 in der Form eines Pulszugs können weitere, komplexere Wellenleiterstrukturen verwendet werden. So kann z. B. ein zweiter Wellenleiter 212 auf der gegenüberliegenden Seite des Resonatorrings 240 zur Auskopplung des Pulszugs genutzt werden (siehe Fig. 5). Weitere Resonatorringe 241, 242 mit Koppelstellen zur weiteren Einkopplung zwischen den Mikro-Ringresonatoren erlauben die Frequenzbereiche von frep durchzustimmen. Wie in Fig. 6 dargestellt, kann diese Ringanordnung 241, 242 verschiedene Durchmesser D, z. B. D1 und D2, aufweisen, um Pulse mit bspw. frep=100 MHz zu erzeugen. Andere Anordnungen mit Pulswiederholraten im hohen GHz-Bereich sind denkbar.

Insbesondere das Betreiben der MRRs nahe der Schwelle der nichtlinearen Antwort ist für den Einsatz als optisches Neuron 251 von Vorteil. So sind die resonatorinternen Leistungsschwellen zur Erzeugung der Pulse mit wenigen $\mu W$ niedrig, was geringe Anforderungen an die Eingangsleistung stellt. Weiterhin bilden resonatorinterne Verluste eine obere Grenze für die maximal erreichbare resonatorinterne Leistung, sodass der Leistungsverlauf eine Sigmoid-Funktion bilden kann, welche proportional zur Intensität der ausgekoppelten Strahlung ist. Dadurch kann das Ausgangssignal 222 eines MRRs als Eingangssignal 221 einer weiteren Schicht von MRRs benutzt werden, was den Aufbau MRR-basierter optischer neuronaler Netzwerke 200 mit mehreren Schichten ermöglicht.

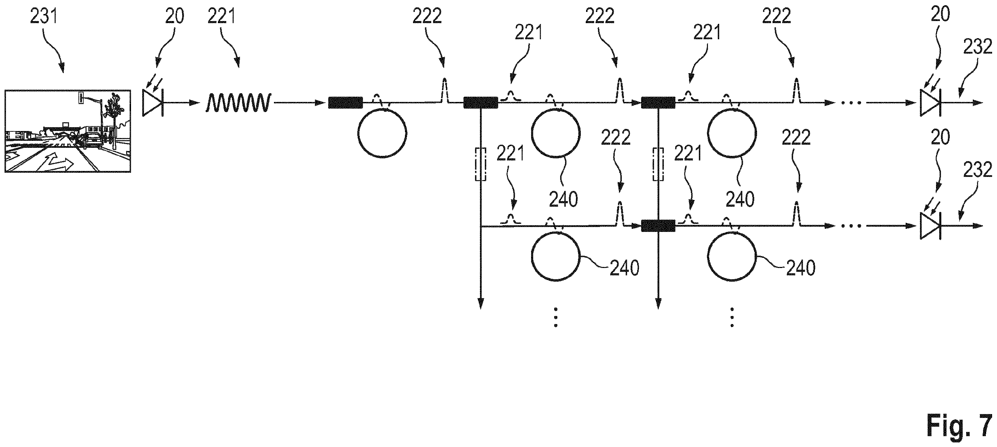

Eine schematische Darstellung einer möglichen Ausführung des MRR-basierten optischen neuronalen Netzwerks 200 (MRR-ONN) ist in Figur 7 dargestellt. Die Eingabeinformationen 231 (z. B. Sensordaten) werden über eine opto-elektronische Schnittstellenanordnung 20 auf einen optischen Träger moduliert und als Eingangssignal 221 für die erste Schicht von MRRs verwendet. Verschiedene MRRs bilden die einzelnen Neuronen 251 des Netzes 200 und sind in mehreren Schichten angeordnet. Jeder einzelnen Schicht kann über einen optischen Splitter das Ausgangssignal 222 der davor angeordneten MRR-Neuronen zugeführt werden. Durch optische Verstärker / Abschwächer können Gewichte 252 der einzelnen Neuronen 251 modifiziert werden. Das klassifizierte Ausgangssignal 222 kann sodann opto-elektronisch konvertiert werden und z. B. an das Umfeldmodell weitergegeben werden.

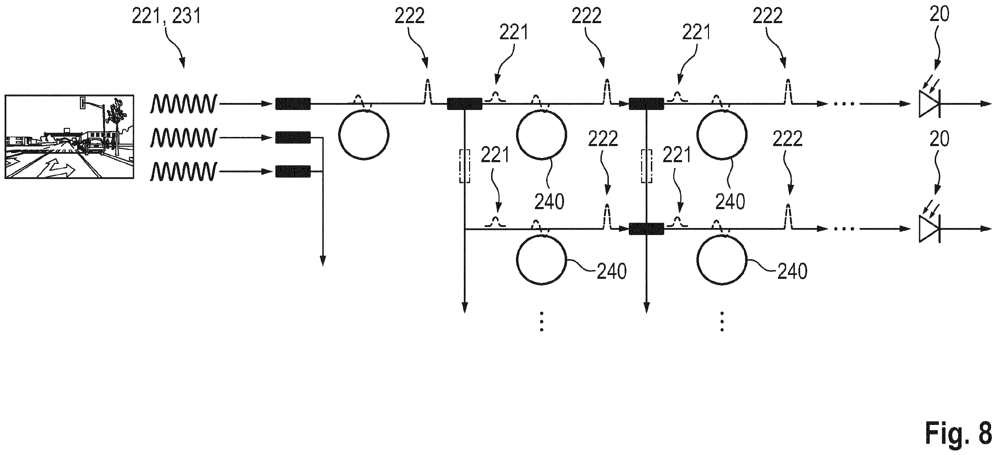

Figur 8 zeigt ein ähnliches MRR-ONN wie in Figur 7. Jedoch wird in diesem Fall die Umfelderfassung - also die Eingabeinformation 231 - direkt als Eingangssignal 221 in den MRR geleitet. So kann z. B. eine Optik ein Bild des Umfelds oder die Strahlung eines Lidar-Systems direkt in die linearen Wellenleiter 210 eines MRR-Arrays einkoppelt werden. Mittels entsprechender optischer Verstärker können die Spektralanteile für den nichtlinearen Betrieb des MRR in ihrer Intensität erhöht werden, sodass die nichtlineare Antwortfunktion aktiviert wird. Somit entsteht ein neuronales Pixelarray des Umfelds ohne elektro-optische Konversion der Sensordaten.

**Bezugszeichenliste**

| | |
|---|---|
| 1 | System |
| 5 | Fahrzeugkomponente |
| 6 | Erfassungsvorrichtung |
| 7 | Fahrerassistenzsystem |
| 8 | Fahrzeug |
| | |
| 10 | Vorrichtung |
| | |
| 20 | Schnittstellenanordnung |
| | |
| 200 | künstliches neuronales Netz |
| 210 | Wellenleiter |
| 211 | Wechselwirkungszone |
| 212 | zweiter Wellenleiter |
| | |
| 220 | Neuronenkomponente |
| 221 | Eingangssignal |
| 222 | Ausgangssignal |
| 231 | Eingabeinformation |
| 232 | Ausgabeinformation |
| | |
| 240 | Mikroresonator, Resonatorring |
| 241 | erster Mikroresonator |
| 242 | zweiter Mikroresonator |
| 243 | Ringwellenleiter |
| 251 | Neuron |
| 252 | Gewicht |
| | |
| 101-102 | Verfahrensschritte |
| A | Abstand |
| D | Durchmesser |

**Patentansprüche**

1.  System (1) für ein Fahrzeug (8), aufweisend:

    - eine Vorrichtung (10) zur Bereitstellung eines künstlichen neuronalen Netzes (200), aufweisend:
    - wenigstens eine optische Neuronenkomponente (220) zur Bereitstellung eines Neurons (251) des Netzes (200),
    wobei die Neuronenkomponente (220) einen Mikroresonator (240) aufweist, um in einer nichtlinearen Abhängigkeit von einem Eingangssignal (221) der Neuronenkomponente (220) ein Ausgangssignal (222) der Neuronenkomponente (220) auszugeben,

        - wenigstens eine Fahrzeugkomponente (5),

    wobei die Vorrichtung (10) eine elektronische und/oder elektrooptische Schnittstellenanordnung (20) aufweist, um:

        - eine elektrische Eingabeinformation (231) von der Fahrzeugkomponente (5) zu empfangen,
        - das optische Eingangssignal (221) der Neuronenkomponente (220) für das neuronale Netz (200) anhand der empfangenen Eingabeinformation (231) bereitzustellen,
        - anhand des optischen Ausgangssignals (222) der Neuronenkomponente (220) eine elektrische Ausgabeinformation (232) für die Fahrzeugkomponente (5) bereitzustellen,

    wobei die wenigstens eine Fahrzeugkomponente (5) eine Erfassungsvorrichtung (6) aufweist, um die Eingabeinformation (231) in der Form einer Bildinformation zu erzeugen, und wobei die wenigstens eine Fahrzeugkomponente (5) ein Fahrerassistenzsystem (7) zur Bereitstellung einer automatischen Fahrfunktion aufweist, um durch das Fahrerassistenzsystem (7) die Ausgabeinformation (232) auszuwerten, und um hierbei die Ausgabeinformation (232) als eine Klassifizierung eines Umfeld des Fahrzeuges (8) zu verwenden, wobei die Neuronenkomponente (220) jeweils mindestens oder genau einen weiteren Mikroresonator (240) aufweist, wobei die Mikroresonatoren (240) benachbart angeordnet sind, wobei ein Abstand (A) zwischen den Mikroresonatoren (240) und/oder ein Durchmesser (D) der Mikroresonatoren (240) das Gewicht (252) definiert.

2. System (1) nach Anspruch 1,
**dadurch gekennzeichnet,**
**dass** der Mikroresonator (240) als ein Mikro-Ringresonator ausgebildet ist.

3. System (1) nach Anspruch 1 oder 2,
**dadurch gekennzeichnet,**
**dass** die Neuronenkomponente (220) jeweils mindestens oder genau einen weiteren Mikroresonator (240) aufweist, wobei die Mikroresonatoren (240) benachbart angeordnet sind, um das genau eine Neuron (251) auszubilden.

4. System (1) nach einem der vorhergehenden Ansprüche,
**dadurch gekennzeichnet,**
**dass** der Mikroresonator (240) zur Bereitstellung eines optischen nichtlinearen Effekts ausgeführt ist, um einen nichtlinearen Zusammenhang zwischen dem Eingangssignal (221) und dem Ausgangssignal (222) zu definieren.

5. System (1) nach einem der vorhergehenden Ansprüche,
**dadurch gekennzeichnet,**
**dass** die Neuronenkomponente (220) dazu ausgebildet ist, das Eingangssignal (221) der Neuronenkomponente (220) nichtlinear mittels wenigstens eines optischen nichtlinearen Effekts zu transformieren, um das Ausgangssignal (222) der Neuronenkomponente (220) zu erzeugen, und durch den wenigstens einen optischen nichtlinearen Effekt eine Aktivierungsfunktion mit dem Eingangssignal (221) der Neuronenkomponente (220) als Eingabe bereitzustellen.

6. System (1) nach einem der vorhergehenden Ansprüche,
**dadurch gekennzeichnet,**
**dass** die Neuronenkomponente (220) dazu ausgebildet ist, wenigstens ein Gewicht (252) des Netzes (200) bereitzustellen, um anhand einer Gewichtung des Eingangssignal (221) das Ausgangssignal (222) auszugeben.

7. System (1) nach Anspruch 6,
**dadurch gekennzeichnet,**
**dass** das Gewicht (252) dazu ausgebildet ist, das Eingangssignal (221) linear zu transformieren, um das Ausgangssignal (222) zu erzeugen, wobei das Gewicht (252) zumindest teilweise durch eine Anordnung und/oder Ausbildung des Mikroresonators (240) definiert ist.

8. Verfahren zur Bereitstellung eines künstlichen neuronalen Netzes (200), wobei die nachfolgenden Schritte durchgeführt werden:

- Bereitstellen eines Neurons (251) des Netzes (200) durch wenigstens eine optische Neuronenkomponente (220), wobei die Neuronenkomponente (220) einen Mikroresonator (240) aufweist,
- Ausgeben eines Ausgangssignals (222) der Neuronenkomponente (220) in einer nichtlinearen Abhängigkeit von einem Eingangssignal (221) der Neuronenkomponente (220) zumindest teilweise durch den Mikroresonator (240), wobei ein System (1) nach einem der Ansprüche 1 bis 7 zur Ausführung der Schritte vorgesehen ist.

9. Verfahren nach Anspruch 8,
**dadurch gekennzeichnet,**
**dass** die nichtlineare Abhängigkeit dadurch bereitgestellt wird, dass das Eingangssignal (221) durch den Mikroresonator nichtlinear transformiert wird, um das Ausgangssignal (222) zu erzeugen, wobei hierzu eine Selbstphasenmodulation des Mikroresonators (240) verwendet wird.

10. Verfahren nach Anspruch 8 oder 9,
**dadurch gekennzeichnet,**
**dass** durch das Neuron (251) eine Amplitude oder eine Frequenz des Eingangssignals (221) nichtlinear verändert wird, um das Ausgangssignal (222) zu erhalten.

**Claims**

1. System (1) for a vehicle (8), the system comprising:

- a device (10) for providing an artificial neural network (200), having:
- at least one optical neuron component (220) for providing a neuron (251) of the network (200), wherein the neuron component (220) has a microresonator (240) for outputting an output signal (222) of the neuron component (220) in a non-linear dependence on an input signal (221) of the neuron component (220),
- at least one vehicle component (5), wherein the device (10) has an electronic and/or electro-optical interface arrangement (20) for:
- receiving electrical input information (231) from the vehicle component (5),
- providing the optical input signal (221) of the neuron component (220) for the neural network (200) based on the received input information (231),
- providing electrical output information (232) for the vehicle component (5) based on the optical output signal (222) of the neuron component (220),

wherein the at least one vehicle component (5) has a detection device (6) to generate the input information (231) in the form of image information, and wherein the at least one vehicle component (5) has a driver assistance system (7) for providing an automatic driving function in order to evaluate the output information (232) by the driver assistance system (7), and to use the output information (232) as a classification of an environment of the vehicle (8), wherein the neuron component (220) has at least or exactly one further microresonator (240), wherein the microresonators (240) are arranged adjacent to one another, wherein a distance (A) between the microresonators (240) and/or a diameter (D) of the microresonators (240) defines the weight (252).

2. System (1) according to claim 1,
**characterized in that**
the microresonator (240) is a micro-ring resonator.

3. System (1) according to either claim 1 or claim 2,
**characterized in that**
the neuron component (220) has at least or exactly one further microresonator (240), the microresonators (240) being arranged adjacent to one another in order to form exactly one neuron (251).

4. System (1) according to any of the preceding claims,
**characterized in that**
the microresonator (240) is designed to provide an optical non-linear effect in order to define a non-linear relationship between the input signal (221) and the output signal (222).

5. System (1) according to any of the preceding claims,
**characterized in that**
the neuron component (220) is designed to transform the input signal (221) of the neuron component (220) non-linearly by means of at least one optical non-linear effect in order to generate the output signal (222) of the neuron component (220), and to provide an activation function with the input signal (221) of the neuron component (220) as input by means of the at least one optical non-linear effect.

6. System (1) according to any of the preceding claims,
**characterized in that**
the neuron component (220) is designed to provide at least one weight (252) of the network (200) in order to output the output signal (222) based on a weighting of the input signal (221).

7. System (1) according to claim 6,
**characterized in that**
the weight (252) is designed to linearly transform the input signal (221) in order to generate the output signal (222), the weight (252) being at least partially defined by an arrangement and/or configuration of the microresonator (240).

8. Method for providing an artificial neural network (200), wherein the following steps are carried out:

- providing a neuron (251) of the network (200) by means of at least one optical neuron component (220), wherein the neuron component (220) has a microresonator (240),
- outputting an output signal (222) of the neuron component (220) in a non-linear dependence on an input signal (221) of the neuron component (220) at least partially by means of the microresonator (240), wherein a system (1) according to any of claims 1 to 7 is provided for carrying out the steps.

9. Method according to claim 8,
**characterized in that**
the non-linear dependence is provided by non-linearly transforming the input signal (221) by means of the microresonator in order to generate the output signal (222), self-phase modulation of the microresonator (240) being used therefor.

10. Method according to either claim 8 or claim 9,
**characterized in that**
an amplitude or a frequency of the input signal (221) is non-linearly changed by means of the neuron (251) in order to obtain the output signal (222).

**Revendications**

1. Système (1) pour un véhicule (8), présentant :

- un dispositif (10) pour la fourniture d'un réseau neuronal artificiel (200), présentant :
- au moins un composant neuronal (220) optique pour la fourniture d'un neurone (251) du réseau (200),
dans lequel le composant neuronal (220) présente un microrésonateur (240) pour émettre un signal de sortie (222) du composant neuronal (220) dans une dépendance non linéaire par rapport à un signal d'entrée (221) du composant neuronal (220),
- au moins un composant de véhicule (5),
dans lequel le dispositif (10) présente un agencement d'interface électronique et/ou électro-optique (20) pour :
- recevoir une information d'entrée (231) électrique provenant du composant de véhicule (5),
- fournir le signal d'entrée (221) optique du composant neuronal (220) pour le réseau neuronal (200) à l'aide de l'information d'entrée (231) reçue,
- à l'aide du signal de sortie (222) optique du composant neuronal (220), fournir une information de sortie (232) électrique pour le composant de véhicule (5),

dans lequel l'au moins un composant de véhicule (5) présente un dispositif de détection (6) pour la production de l'information d'entrée (231) sous la forme d'une information d'image, et dans lequel l'au moins un composant de véhicule (5) présente un système d'assistance au conducteur (7) pour la fourniture d'une fonction de conduite automatique, pour évaluer l'information de sortie (232) par le système d'assistance au conducteur (7), et pour utiliser à cet effet l'information de sortie (232) comme une classification d'un environnement du véhicule (8),
dans lequel le composant neuronal (220) présente respectivement au moins ou exactement un autre microrésonateur (240), dans lequel les microrésonateurs (240) sont disposés de manière adjacente, dans lequel une distance (A) entre les microrésonateurs (240) et/ou un diamètre (D) des microrésonateurs (240) définissent le poids (252).

2. Système (1) selon la revendication 1,
**caractérisé en ce**
**que** le microrésonateur (240) est conçu comme un microrésonateur à anneau.

3. Système (1) selon la revendication 1 ou 2,
**caractérisé en ce**
**que** le composant neuronal (220) présente respectivement au moins ou exactement un autre microrésonateur (240), dans lequel les microrésonateurs (240) sont disposés de manière adjacente pour former l'exactement un neurone (251).

4. Système (1) selon l'une des revendications précédentes,
**caractérisé en ce**
**que** le microrésonateur (240) est réalisé pour la fourniture d'un effet optique non linéaire pour définir une relation non linéaire entre le signal d'entrée (221) et le signal de sortie (222).

5. Système (1) selon l'une des revendications précédentes,
**caractérisé en ce**

**que** le composant neuronal (220) est conçu pour transformer de manière non linéaire le signal d'entrée (221) du composant neuronal (220) à l'aide d'au moins un effet optique non linéaire, pour produire le signal de sortie (222) du composant neuronal (220), et pour fournir, par l'au moins un effet optique non linéaire, une fonction d'activation avec le signal d'entrée (221) du composant neuronal (220) comme entrée.

6. Système (1) selon l'une des revendications précédentes,
**caractérisé en ce**
**que** le composant neuronal (220) est conçu pour fournir au moins un poids (252) du réseau (200) afin d'émettre le signal de sortie (222) à l'aide d'une pondération du signal d'entrée (221).

7. Système (1) selon la revendication 6,
**caractérisé en ce**
**que** le poids (252) est conçu pour transformer linéairement le signal d'entrée (221) pour produire le signal de sortie (222), dans lequel le poids (252) est au moins partiellement défini par un agencement et/ou une configuration du microrésonateur (240).

8. Procédé pour la fourniture d'un réseau neuronal artificiel (200), dans lequel les étapes suivantes sont effectuées :

- fourniture d'un neurone (251) du réseau (200) par au moins un composant neuronal (220) optique, dans lequel le composant neuronal (220) présente un microrésonateur (240),
- émission d'un signal de sortie (222) du composant neuronal (220) dans une dépendance non linéaire par rapport à un signal d'entrée (221) du composant neuronal (220) au moins partiellement par le microrésonateur (240), dans lequel un système (1) selon l'une des revendications 1 à 7 est prévu pour la réalisation des étapes.

9. Procédé selon la revendication 8,
**caractérisé en ce**
**que** la dépendance non linéaire est fournie par le fait que le signal d'entrée (221) est transformé de manière non linéaire par le microrésonateur pour produire le signal de sortie (222), dans lequel une modulation de phase automatique du microrésonateur (240) est utilisée à cet effet.

10. Procédé selon la revendication 8 ou 9,
**caractérisé en ce**
**qu'**une amplitude ou une fréquence du signal d'entrée (221) est modifiée de manière non linéaire par le neurone (251) pour obtenir le signal de sortie (222).

**Fig. 1**

**Fig. 2**

**Fig. 3**

**Fig. 4**

Fig. 5

Fig. 6

Fig. 7

Fig. 8

EP 4 232 960 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017210550 A1

- WO 2008136886 A1

**In der Beschreibung aufgeführte Nicht-Patentliteratur**

- **INDRANIL CHAKRABORTY et al.** Photonic In-Memory Computing Primitive for Spiking Neural Networks Using Phase-Change Materials. *arXiv.org*, 24 October 2018
- Integrated Coherent Ising Machines Based on Self-Phase Modulation in Microring Resonators. **NIKOLAS TEZAK et al.** IEEE JOURNAL OF SELECTED TOPICS IN QUANTUM ELECTRONICS. IEEE, 01 January 2020, 1-15

- **JELENA KOCI et al.** An End-to-End Deep Neural Network for Autonomous Driving Designed for Embedded Automotive Platforms. *SENSORS*, 03 May 2019, vol. 19 (9), 2064